# EUROPEAN PATENT SPECIFICATION

(11) **EP 3 828 064 B1**
(45) Date of publication and mention of the grant of the patent: **23.02.2022**
(21) Application number: 20195047.4
(22) Date of filing: 08.09.2020
(51) Int. Cl.: B62J 11/13, B62J 11/16, B62K 25/04

(54) **STRADDLED VEHICLE**
GRÄTSCHSITZFAHRZEUG
VÉHICULE À ENFOURCHER

(30) Priority: 29.11.2019 JP 2019217158
(43) Date of publication of application: 02.06.2021
(73) Proprietor: YAMAHA HATSUDOKI KABUSHIKI KAISHA, Iwata-shi, Shizuoka-ken 438-8501 (JP)
(72) Inventor: ARITA, Wataru, Iwata-shi, Shizuoka-ken 438-8501 (JP); SUZUKI, Keisuke, Iwata-shi, Shizuoka-ken 438-8501 (JP); WATANABE, Masayuki, Iwata-shi, Shizuoka-ken 438-8501 (JP); NAGAO, Masahiro, Iwata-shi, Shizuoka-ken 438-8501 (JP); HASHIMOTO, Takayuki, Iwata-shi, Shizuoka-ken 438-8501 (JP)
(74) Representative: Grünecker Patent- und Rechtsanwälte PartG mbB

(56) References cited:
- EP-A2- 0 887 253
- EP-A2- 0 894 702
- EP-A2- 1 408 246
- CN-A- 105 398 539
- US-A- 359 536

## Description

The present invention relates to a straddled vehicle.

On the body of a straddled vehicle such as a motorcycle, various cables, hoses, and the like may be installed. Examples of cables include brake cables, throttle cables, and the like. A cable may be made of a metal material, for example. A cable may be configured so that its main part (core) that is made of a metal material is protected by a coating layer that is made of a resin material (e.g., polyvinyl chloride). Examples of hoses include brake hoses. Hereinafter, any such elongated member for installation on the body of a straddled vehicle will be referred to as a "cord-like member".

In order to restrain a cord-like member from contacting the body or the like during riding, guide members for guiding the cord-like member may be attached to the body. Such guide members are disclosed in Patent Document 1, for example. A guide member disclosed in Patent Document 1 includes: a base made of a resin material and attached to the body; and a guide portion made integral with the base. The guide portion has an annular shape, and a cord-like member is allowed to extend through the guide portion, whereby the cord-like member is guided (i.e., its movement is restrained).

Another known type of guide member is guide members that are made of a metal material. A metal guide member is disclosed in Patent Document 2, for example.

In addition, document EP 0 887 253 A2 discloses a guide member having the features of the preamble of claim 1.

Patent Document 1: Japanese Laid-Open Patent Publication No. 2009-83547
Patent Document 2: Japanese Laid-Open Patent Publication No. 2014-61840

In recent years, new electronic parts have been introduced in motorcycles, e.g., ABS (Antilock Braking System) and SGCU (Starter Generator Control Unit), thus resulting in an increased number of parts being mounted on the body. Thus, on a body with a large number of parts mounted thereon, cord-like members need to be installed in a manner not to undermine aesthetic design and compactness.

However, when a cord-like member being guided by a guide member is installed with a small bend radius, a large contact load will exist between the cord-like member and the guide member. In particular, when the handle bar is swung to the right or left, or during a stroke of the suspensions, the cord-like member will slide against the guide member, thus creating an even greater contact load between the cord-like member and the guide member.

In order to install a cord-like member in a manner not to undermine aesthetic design and compactness, the cord-like member needs to be guided in a narrow space while suppressing influences of abrasion that might be caused by the increased contact load.

Embodiments of the present invention have been made in view of the aforementioned problems, and an objective thereof is to suppress abrasion, caused by a guide member, of a cord-like member that is installed on the body of a straddled vehicle, and to improve freedom in installing the cord-like member.

Above object is achieved by a straddled vehicle according to claim 1. Preferred embodiments are laid down in the dependent claims. A straddled vehicle according to an embodiment of the present invention comprises: a body; and a cord-like member installed on an outside and/or an inside of the body, wherein, the straddled vehicle further comprising a guide member disposed so as to guide the cord-like member, the guide member restraining the cord-like member from moving in a first direction which is substantially orthogonal to a longitudinal direction of the cord-like member; the guide member includes a support shaft which is substantially orthogonal to the first direction and which extends so as to intersect the longitudinal direction of the cord-like member, and includes a roller rotatably supported by the support shaft; and the guide member does not restrain the cord-like member from moving in a second direction which is an opposite direction to the first direction.

The roller has a cylindrical shape with a constant outer diameter from one end to the other end of the roller.

In one embodiment, the roller comprises a resin material.

In one embodiment, the roller is made of polyamide, polypropylene, a phenol resin, polyacetal, or a composite material containing any of the above.

In one embodiment, the guide member includes no more than one roller and no more than one support shaft.

In one embodiment, opposite ends of the cord-like member are disposed so that a distance between the opposite ends is changeable during riding of the straddled vehicle.

In one embodiment, the straddled vehicle further comprises a handle bar provided at a front portion of the body, wherein one end of the cord-like member is connected to the handle bar.

In one embodiment, the straddled vehicle further comprises a power unit, the power unit including an engine or a motor and being mounted to the body, wherein another end of the cord-like member is connected to the power unit.

In one embodiment, the cord-like member is a clutch cable.

In one embodiment, the cord-like member is a throttle cable.

In one embodiment, the straddled vehicle further comprises a front wheel and a rear wheel, wherein, the body includes a front suspension supporting the front wheel and a rear suspension supporting the rear wheel; and another end of the cord-like member is connected to an unsprung portion of the straddled vehicle.

In one embodiment, the cord-like member is a front brake hose.

In one embodiment, the straddled vehicle further comprises a front wheel and a rear wheel, wherein, the body includes a front suspension supporting the front wheel and a rear suspension supporting the rear wheel; and one end of the cord-like member is connected to an unsprung portion of the straddled vehicle.

In one embodiment, the body includes a frame; and another end of the cord-like member is connected to the frame.

In one embodiment, the cord-like member is a rear brake hose.

In one embodiment, the cord-like member is a lead wire for use with a speed sensor.

In one embodiment, the straddled vehicle further comprises: a handle bar provided at a front portion of the body; a first electrical component provided on the handle bar; and a second electrical component provided in a portion of the straddled vehicle other than the handle bar, wherein the cord-like member is a cable harness or a lead wire having one end that is connected to the first electrical component and another end that is connected to the second electrical component.

In one embodiment, the straddled vehicle further comprises a front wheel and a rear wheel, wherein, the body includes a front suspension supporting the front wheel and a rear suspension supporting the rear wheel; the straddled vehicle further comprises a third electrical component provided in an unsprung portion of the straddled vehicle and a fourth electrical component provided on a portion of the straddled vehicle other than the unsprung portion; and the cord-like member is a cable harness or a lead wire having one end that is connected to the third electrical component and another end that is connected to the fourth electrical component.

A straddled vehicle according to an embodiment of the present invention includes a guide member disposed so as to guide the cord-like member, the guide member restraining the cord-like member from moving in a direction (first direction) which is substantially orthogonal to a longitudinal direction of the cord-like member. As a result, during riding (e.g., at the time of steering), the straddled vehicle is able to restrain the cord-like member from moving in the first direction to come in contact with the body or the like.

Moreover, the guide member of a straddled vehicle according to an embodiment of the present invention includes: a support shaft which is substantially orthogonal to the first direction and which extends so as to intersect the longitudinal direction of the cord-like member; and a roller which is rotatably supported by the support shaft. Thus, when the cord-like member moves along the longitudinal direction, the roller abutting with the cord-like member rotates around the support shaft, whereby abrasion of the cord-like member due to sliding of the cord-like member against the guide member can be suppressed. This makes possible an installation such that the cord-like member has a relatively large contact load with respect to the guide member (e.g., the cord-like member has a relatively small bend radius), thus promoting installation freedom.

Furthermore, the guide member of the straddled vehicle according to an embodiment of the present invention does not restrain the cord-like member from moving in a second direction which is the opposite direction to the first direction. If the guide member were arranged so as to restrain the cord-like member from moving not only in the first direction but also moving in the second direction, then the cord-like member would be always in contact with the guide member. On the other hand, the straddled vehicle according to an embodiment of the present invention is arranged so that the guide member does not restrain cord-like member from moving in the second direction, such that the cord-like member can be in a state of non-contact with the guide member. As a result, the amount of time that the cord-like member is in contact with the guide member can be reduced (i.e., the chances of contact are reduced), and abrasion of the cord-like member can be better suppressed. Moreover, in the case where the guide member does not restrain the cord-like member from moving in the second direction, the guide member does not need to be structured so as to surround (sandwich) the cord-like member, thereby providing the advantage of facilitating the mounting work and the exchanging work of the cord-like member, and an advantage in that sand or mud that has come between the guide member and the cord-like member during riding is easier to fall off.

When the roller has a cylindrical shape with a constant outer diameter, such a roller does not restrain the cord-like member from moving along a rotation axis direction of the roller (i.e., the direction that the support shaft extends). Therefore, even in a straddled vehicle for uses that are subject to relatively frequent (or large amounts of) vibrations during riding, vibrations of the cord-like member associated with vibrations during riding can be dissipated (attenuated). As a result, in the case where the cord-like member is connected to the handle bar, for example, the vibrations felt in the hands of the rider can be reduced, thus alleviating discomfort. Moreover, when the roller has a cylindrical shape with a constant outer diameter, the relatively simple shape of the roller allows the production cost of the guide member to be reduced.

When the roller is made of a resin material, the outer surface of the roller is softer (i.e., having lower hardness) than in the case where the roller is made of e.g. a metal material, whereby abrasion of the cord-like member can be suppressed more reliably. Moreover, when the roller is made of a resin material, the inner surface of the roller is also soft, whereby the support shaft can be restrained from being scratched. Therefore, when the support shaft is made of a metal material, the support shaft is restrained from rusting (that may begin in a scratch) and causing the roller to stick to the support shaft.

As the resin material composing the roller, polyamide, polypropylene, phenol resins, and polyacetal can be suitably used. When the resin material composing the roller is polyamide (e.g., nylon), it is easier to reduce the friction coefficient of the roller, whereby abrasion of the cord-like member can be suppressed more reliably. Also, abrasion of the roller itself can be suppressed. Moreover, polypropylene and phenol resins excel in mechanical strength. Polyacetal excels in abrasion resistance and fatigue resistance. Furthermore, the roller may be made of a composite material that contains any of the above.

When adopting a construction in which the guide member includes no more than one roller and no more than one support shaft, i.e., a construction in which the guide member includes only one roller and one support shaft, it is possible to reduce the production cost of the guide member, and promote light-weightness and compactness of the guide member.

The guide member of a straddled vehicle according to an embodiment of the present invention is suitably used in a construction in which the distance between opposite ends of the cord-like member is changeable during the riding of the straddled vehicle. If the distance between opposite ends of the cord-like member changes during riding, deformation and movement of the cord-like member may result, possibly risking contact of the cord-like member with the body or the like. In any place where a movement of the cord-like member in a certain direction may risk contact, providing the guide member to restrain the cord-like member from moving in that direction can restrain the cord-like member from coming into contact with the body or the like. Since the guide member of the straddled vehicle according to the present invention has the above-described construction, abrasion of the cord-like member due to sliding of the cord-like member against the guide member can be suppressed.

In the case where one end of the cord-like member is connected to the handle bar, the position of one end of the cord-like member (i.e., its relative position with respect to the other end) may change with steering (handle bar operation), so that the distance between opposite ends of the cord-like member is likely to change during riding. This underlines the significance of applying the embodiment of the present invention.

In the case where one end of the cord-like member is connected to the handle bar, the other end of the cord-like member may be connected to the power unit, for example. An example of the cord-like member whose opposite ends are thus positioned is a clutch cable or a throttle cable.

Alternatively, in the case where one end of the cord-like member is connected to the handle bar, the other end of the cord-like member may be connected to the unsprung portion of the straddled vehicle. An example of the cord-like member whose opposite ends are thus positioned is a front brake hose.

In the case where one end of the cord-like member is connected to the unsprung portion of the straddled vehicle, the position of one end of the cord-like member (i.e., its relative position with respect to the other end) may change with a stroke of the front suspension and/or the rear suspension, so that the distance between opposite ends of the cord-like member is likely to change during riding. This underlines the significance of applying the embodiment of the present invention.

In the case where one end of the cord-like member is connected to the unsprung portion of the straddled vehicle, the other end of the cord-like member may be connected to the frame, for example. An example of the cord-like member whose opposite ends are thus positioned is a rear brake hose.

Another example of the cord-like member whose one end is connected to the unsprung portion of the straddled vehicle is a lead wire for use with a speed sensor.

Classifying electrical components on the straddled vehicle generally into electrical components which are provided on the handle bar (first electrical components) and electrical components which are provided on any portion of the straddled vehicle other than the handle bar (second electrical components), the cord-like member may be a cable harness or a lead wire having one end that is connected to a first electrical component and the other end that is connected to a second electrical component.

Classifying electrical components on the straddled vehicle generally into electrical components which are provided on the unsprung portion of the straddled vehicle (third electrical components) and electrical components provided on a portion of the straddled vehicle other than the unsprung portion (fourth electrical components), the cord-like member may be a cable harness or a lead wire having one end that is connected to a third electrical component and the other end that is connected to a fourth electrical component.

According to an embodiment of the present invention, it is possible to suppress abrasion, caused by a guide member, of a cord-like member that is installed on the body of a straddled vehicle, thereby improving freedom in installing the cord-like member.

### BRIEF DESCRIPTION OF THE DRAWINGS

FIG. 1 is a left side view schematically showing a motorcycle (straddled vehicle) 100 according to an embodiment of the present invention.
FIG. 2 is a diagram schematically showing a cord-like member 20 and a guide member 30 included in the motorcycle 100 as viewed along direction X, which is orthogonal to the longitudinal direction LD of the cord-like member 20.
FIG. 3 is a diagram schematically showing the cord-like member 20 and the guide member 30 as viewed along direction Y, which is orthogonal to the longitudinal direction LD of the cord-like member 20 and direction X.
FIG. 4 is a diagram schematically showing the cord-like member 20 and the guide member 30 as viewed along direction Z, which is parallel to the longitudinal direction LD of the cord-like member 20.
FIG. 5 is a perspective view schematically showing the guide member 30.
FIG. 6 is a diagram showing how the cord-like member 20 may move along the rotation axis direction of a roller 32.
FIG. 7 is a diagram schematically showing the cord-like member 20 and the guide member 30 as viewed along direction X, which is orthogonal to the longitudinal direction LD of the cord-like member 20.
FIG. 8 is a diagram showing an example positioning of a clutch cable 21 in the motorcycle 100.
FIG. 9 is a diagram showing an example positioning of a throttle cable 22 in the motorcycle 100.
FIG. 10 is a diagram showing an example positioning of a front brake hose 23 in the motorcycle 100.
FIG. 11 is a diagram showing another example positioning of a front brake hose 23 in the motorcycle 100.
FIG. 12 is a diagram showing an example positioning of a rear brake hose 24 in the motorcycle 100.
FIG. 13 is a diagram showing another example positioning of a rear brake hose 24 in the motorcycle 100.
FIG. 14 is a diagram showing an example positioning of a cable harness (or a lead wire) 25 in the motorcycle 100.
FIG. 15 is a diagram showing another example positioning of a cable harness (or a lead wire) 25 in the motorcycle 100.
FIG. 16 is a diagram showing an example positioning of a lead wire 26 for use with a speed sensor, on the front side of the motorcycle 100.
FIG. 17 is a diagram showing an example positioning of a lead wire 26 for use with a speed sensor, on the rear side of the motorcycle 100.
FIG. 18 is a diagram schematically showing cord-like members 20 and the guide member 30 as viewed along direction X, which is orthogonal to the longitudinal direction LD of the cord-like member 20.
FIG. 19 is a diagram schematically showing cord-like members 20 and the guide member 30 as viewed along direction Z, which is parallel to the longitudinal direction LD of the cord-like member 20.

### DETAILED DESCRIPTION

Hereinafter, with reference to the drawings, a straddled vehicle according to embodiments of the present invention will be described. A straddled vehicle is likely to allow sand or mud to enter inside its body cover. Moreover, its handle bar and suspensions, undergoing large motions, may aggravate abrasion of the cord-like member. Therefore, there is a large significance in applying the present invention to a straddled vehicle. Note that the present invention is not limited to the following embodiments. In the following description, straddled vehicles according to embodiments of the present invention will be illustrated as motorcycles.

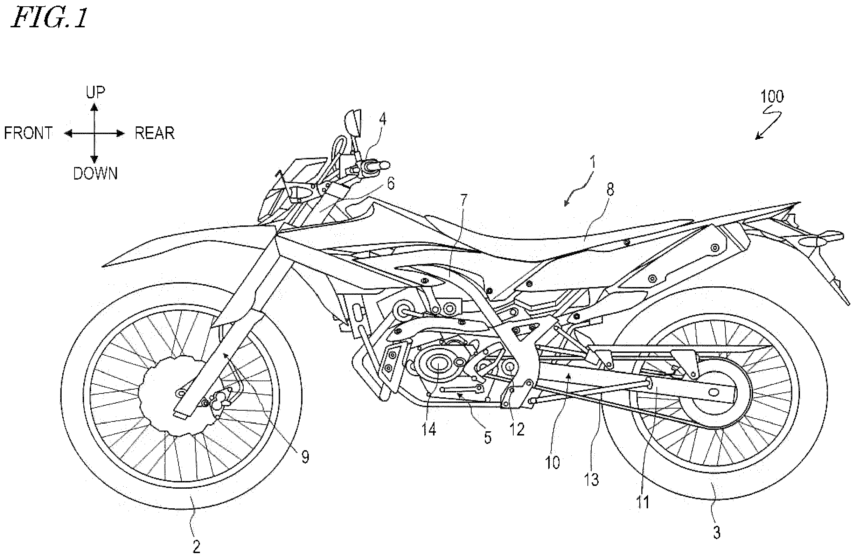

First, with reference to FIG. 1, an overall construction of a motorcycle 1 according to the present embodiment will be described. FIG. 1 is a left side view schematically showing the motorcycle 1. In the following description and the drawings, the expressions "front", "rear", "right", "left", "up", and "down" are respectively meant as the front, rear, right, left, up, and down as perceived by the rider sitting on a seat 8 of the motorcycle 1.

As shown in FIG. 1, the motorcycle 100 includes a body 1, a front wheel 2, a rear wheel 3, a handle bar 4 provided at a front portion of the body 1, and a power unit 5 mounted on the body 1.

The body 1 includes: a frame (body frame) 7 having a head pipe 6; a seat 8 supported on the frame 7; a front suspension 9 supporting the front wheel 2; and a rear suspension 10 supporting the rear wheel 3.

In the head pipe 6, a steering shaft (not shown) is inserted so as to be capable of rotating right or left. The handle bar 4 is secured at an upper portion of the steering shaft. The front suspension 9 is secured at a lower portion of the steering shaft. Herein, the front suspension 9 is composed of front forks of telescopic type. The front wheel 3 is rotatably supported at a lower end portion of the front suspension 9.

The rear suspension 10 includes rear arms 11, and rear cushion (not shown) connected to the rear arms 11. Front end portions of the rear arms 11 are swingably supported by the frame 7 via a pivot axis 12. At rear end portions of the rear arms 11, the rear wheel 3 is rotatably supported.

The rear wheel 3 and the power unit 5 are linked by a chain 13. The power unit 5 includes an engine 14. The power unit 5 further includes a clutch, a transmission, etc. (none of which is shown). The power unit 5 is supported by the frame 7.

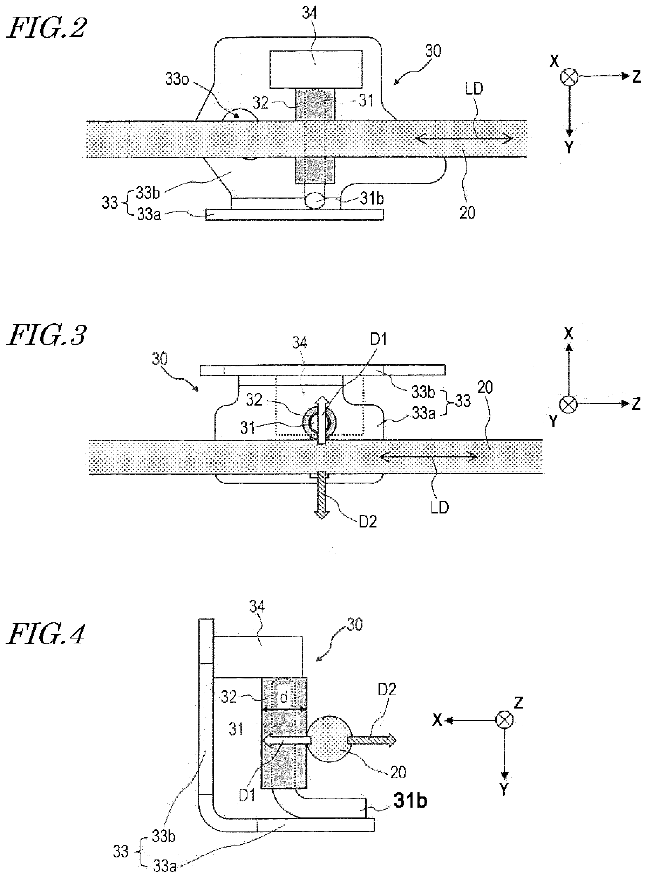

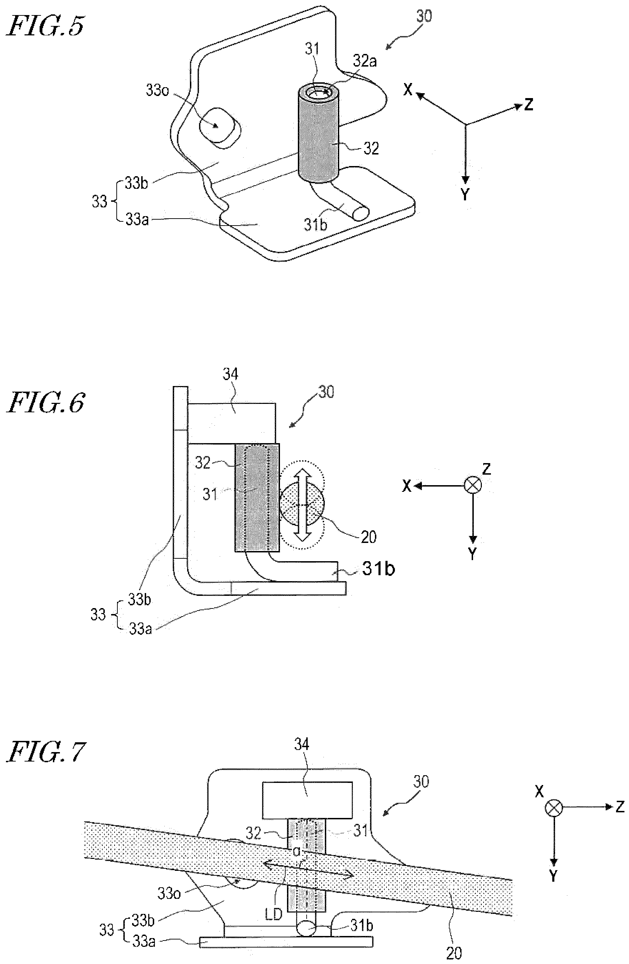

The motorcycle 100 according to the present embodiment further includes: a cord-like member installed on the outside and/or the inside of the body 1; and a guide member disposed so as to guide the cord-like member. Hereinafter, with reference to FIG. 2 to FIG. 5, this will be described. FIG. 2, FIG. 3, and FIG. 4 are diagrams schematically showing a cord-like member 20 and a guide member 30 included in the motorcycle 100. FIG. 2, FIG. 3, and FIG. 4 are diagrams showing the cord-like member 20 and the guide member 30 respectively along three directions X, Y, and Z which are orthogonal to one another, where the cord-like member 20 is only partly shown. FIG. 5 is a perspective view schematically showing the guide member 30 alone.

The cord-like member 20 is a member for installation that is elongated, i.e., having a shape by which a longitudinal direction LD is defined. FIG. 2 and FIG. 3 are diagrams as viewed from, respectively, directions X and Y which are orthogonal to the longitudinal direction LD of the cord-like member 20. FIG. 4 is a diagram as viewed from direction Z, which is parallel to the longitudinal direction LD of the cord-like member 20.

The cord-like member 20 may be a cable(s) ("also referred to as wires") for mechanically or electrically connecting various parts together, for example. Examples of cables include clutch cables, throttle cables, cable harnesses, and lead wires. Alternatively, the cord-like member 20 may be a hose(s) ("also referred to as pipes") inside which a liquid is passed. Examples of hoses include brake hoses, cooling water hoses (radiator hoses), and gasoline hoses. The cord-like member 20 may be made of a plurality of different materials. For example, the cord-like member 20 may have a construction in which a main part (core) made of a metal material is covered with a coating layer that is made of a resin material (e.g. polyvinyl chloride).

The guide member 30 is disposed so as to guide the cord-like member 20. Specifically, the guide member 30 restrains the cord-like member 20 from moving in a first direction D1 (see FIG. 3 and FIG. 4) which is substantially orthogonal to the longitudinal direction LD of the cord-like member 20 (or more specifically, a longitudinal direction LD of the cord-like member 20 as defined at the position where the guide member 30 is disposed).

The guide member 30 includes a support shaft 31, a roller 32, a bracket 33, and a stop member 34. In FIG. 5, the stop member 34 is omitted from illustration.

The support shaft 31 extends so as to be substantially orthogonal to the first direction D1 and to intersect the longitudinal direction LD of the cord-like member 20. FIG. 2 and other drawings illustrate an example where the support shaft 31 extends so as to be substantially orthogonal to both the first direction D1 and the longitudinal direction LD of the cord-like member 20. In the present embodiment, the support shaft 31 is made of a metal material. As the metal material, a steel (iron alloy) or an aluminum alloy may be used, for example, although this is not a limitation. The length of the support shaft 31 is e.g. not less than 5 mm and not more than 100 mm. The diameter of the support shaft 31 is e.g. not less than 3 mm and not more than 50 mm.

The roller 32 is rotatably supported by the support shaft 31. The roller 32 has a cylindrical shape with a constant outer diameter d. In other words, the outer diameter d of the roller 32 stays substantially equal from one end to the other end of the roller 32. The support shaft 31 is allowed to extend in an aperture (shaft hole) 32a (see FIG. 5) of the roller 32. In the present embodiment, the roller 32 is made of a resin material. No bearings, bushings, etc., are disposed between the roller 32 and the support shaft 31. In other words, the support shaft 31 directly supports the roller 32.

The bracket 33 includes a horizontal portion 33a and a vertical portion 33b, each of which is plate-shaped. The bracket 33 is made of a metal material, for example. The horizontal portion 33a extends so as to be substantially orthogonal to the direction that the support shaft 31 extends (i.e., substantially parallel to direction X and direction Z in the figure). The vertical portion 33b extends substantially parallel to the direction that the support shaft 31 extends (i.e., substantially parallel to direction Y and direction Z in the figure). An end of the horizontal portion 33a and an end of the vertical portion 33b are continuous. In the present embodiment, a base 31b is provided so as to extend from one end of the support shaft 31 and intersect (more specifically, being substantially orthogonal to) the direction that the support shaft 31 extends. The base 31b is bonded to the horizontal portion 33a (e.g., via welding), whereby the support shaft 31 is secured to the bracket 33. In the example shown in the figure, an opening 33o is made in the vertical portion 33b, so that a fastening member (such as a bolt) extending through the opening 33o allows the guide member 30 to be attached and secured to the body 1 and the like. The guide member 30 may be attached to the frame 7 of the body 1, or attached to any portion of the body 1 other than the frame 7. Moreover, the guide member 30 may be attached to a portion of the motorcycle 100 other than the body 1. As used herein, the "horizontal portion" and the "vertical portion" are so designated out of a mere convention, rather than to mean that these are actually parallel to the horizontal direction and the vertical direction when the guide member 30 is attached to the body 1 or the like.

The stop member 34 is attached to the vertical portion 33b of the bracket 33, and stops up one end of the roller 32. The stop member 34 functions as a means to prevent disengagement, such that the roller 32 is restrained from coming off the support shaft 31. The stop member 34 may be e.g. a sponge, which is secured to the vertical portion 33b of the bracket 33 by a pressuresensitive adhesive tape, for example.

Since the roller 32 abuts with the cord-like member 20, the guide member 30 having the above construction is able to restrain (prevent) the cord-like member 20 from moving in the first direction D1. In other words, the guide member 30 is disposed so that the roller 32 is located between the cord-like member 20 and any portion that the cord-like member 20 is not supposed to come in contact with. With the guide member 30 as such, when e.g. a steering or a suspension stroke is made during riding, the straddled vehicle 100 according to the present embodiment is able to restrain the cord-like member 20 from moving in the first direction D1 to come in contact with the body 1 or the like.

Moreover, the guide member 30 of the straddled vehicle 100 according to the present embodiment includes: the support shaft 31 which is substantially orthogonal to the first direction D1 and which extends so as to intersect the longitudinal direction LD of the cord-like member 20; and the roller 32 which is rotatably supported by the support shaft 31. As a result, when the cord-like member 20 moves along the longitudinal direction LD, the roller 32 abutting with the cord-like member 20 rotates around the support shaft 31, whereby abrasion of the cord-like member 20 due to sliding of the cord-like member 20 against the guide member 30 can be suppressed. This makes possible an installation such that the cord-like member 20 has a relatively large contact load with respect to the guide member 30 (e.g., the cord-like member 20 has a relatively small bend radius), thus promoting installation freedom. This allows the cord-like member 20 to be installed in places where it has conventionally been unable to be installed.

Furthermore, in the guide member 30 of the straddled vehicle 100 according to the present embodiment, as will be understood from FIG. 3 and FIG. 4, no member that abuts with the cord-like member 20 is disposed on the opposite side of the cord-like member 20 to the roller 32. In other words, the guide member 30 does not restrain the cord-like member 20 from moving in a second direction D2 (see FIG. 3 and FIG. 4) which is the opposite direction to the first direction D1. If the guide member 30 were arranged so as to restrain the cord-like member 20 not only from moving in the first direction D1 but also from moving in the second direction D2, then the cord-like member 20 would be always in contact with the guide member 30. On the other hand, the present embodiment is arranged so that the guide member 30 does not restrain the cord-like member 20 from moving in the second direction D2, such that the cord-like member 20 can be in a state of non-contact with the guide member 30. As a result, the amount of time that the cord-like member 20 is in contact with the guide member 30 can be reduced (i.e., the chances of contact are reduced), and abrasion of the cord-like member 20 can be better suppressed. Moreover, in the case where the guide member 30 does not restrain the cord-like member 20 from moving in the second direction D2, the guide member 30 does not need to be structured so as to surround (sandwich) the cord-like member 20, thereby providing the advantage of facilitating the mounting work and the exchanging work of the cord-like member 20. Depending on the manner of installation of the cord-like member, in a straddled vehicle for off-road use, sand or mud is likely to come between the guide member and the cord-like member during riding, such that the sand or mud having thus entered may aggravate abrasion (sand or mud acting as abrasive grains). On the other hand, the present embodiment is arranged so that the guide member 30 does not have any structure surrounding the cord-like member 20 (e.g., a box-like member), thus providing an advantage in that sand or mud that has come between the guide member 30 and the cord-like member 20 during riding is easier to fall off.

Moreover, the guide member 100 of the straddled vehicle 100 according to the present embodiment includes only one support shaft 31 and one roller 32. This can reduce the production cost of the guide member 30, and promote light-weightness and compactness of the guide member 30.

Furthermore, in the present embodiment, no bearings, bushings, etc., are provided between the roller 32 and the support shaft 31, thereby also providing effects such as cost reduction, compactness, and light-weightness of the guide member 30.

Also in the present embodiment, the support shaft 31 and the roller 32 are formed as separate pieces, thereby providing the following advantage. If the support shaft 31 and the roller 32 were integrated, the roller 32 would rotate together with the support shaft 31, in which case a structure (bearing portion) would be needed for rotatably supporting the support shaft 31; in that case, if the area of contact between the bearing portion and the support shaft 31 were small, abrasion of the support shaft 31 would be likely. On the other hand, the support shaft 31 and the roller 32 being separate pieces helps a relatively large area of contact between the support shaft 31 and the roller 32 to be obtained, such that the support shaft 31 is unlikely to undergo abrasion, thereby resulting in an improved reliability.

Given that the roller 32 has a cylindrical shape with a constant outer diameter, such a roller 32 does not restrain the cord-like member 20 from moving along a rotation axis direction of the roller 32 (i.e., the direction that the support shaft 31 extends). Therefore, even in a straddled vehicle 100 for uses that are subject to relatively frequent (or large amounts of) vibrations during riding, vibrations of the cord-like member 20 associated with vibrations during riding can be dissipated (attenuated). On the other hand, if the roller 32 had the shape of a 'thickened diabolo' (i.e., a shape whose outer diameter decreases from both ends toward its center), for example, the cord-like member 20 would be restrained from moving along the rotation axis direction of the roller 32. Therefore, in the case where the cord-like member 20 (e.g., a clutch cable) is connected to the handle bar 4, the cord-like member 20 will pick up vibrations of the vehicle and transmit them to the handle bar 4, whereby the rider will feel discomfort because of the vibrations in the hands holding the handle bar 4. On the other hand, the present embodiment is arranged so that the roller 32 has a cylindrical shape with a constant outer diameter; therefore, as shown in FIG. 6, the cord-like member 20 is able to move along the rotation axis direction of the roller 32, whereby vibrations can be attenuated. Even if the cord-like member 20 is connected to the handle bar 4, the vibrations felt in the hands of the rider can be reduced, thus alleviating discomfort.

Moreover, when the roller 32 has a cylindrical shape with a constant outer diameter, the relatively simple shape of the roller 32 allows the production cost of the guide member 30 to be reduced.

When the roller 32 is made of a resin material, the outer surface (i.e., the outer peripheral surface) of the roller 32 is softer (i.e., having lower hardness) than in the case where the roller 32 is made of e.g. a metal material, whereby abrasion of the cord-like member 20 can be suppressed more reliably. Moreover, when the roller 32 is made of a resin material, the inner surface (i.e., the inner peripheral surface) of the roller 32 is also soft, whereby the support shaft 31 can be restrained from being scratched. Therefore, when the support shaft 31 is made of a metal material, the support shaft 31 is restrained from rusting (that may begin in a scratch) and causing the roller 32 to stick to the support shaft 31.

As the resin material, polyamide (e.g., nylon) can be suitably used. When the resin material composing the roller 32 is polyamide, it is easier to reduce the friction coefficient of the roller 32, whereby abrasion of the cord-like member 20 can be suppressed more reliably. Moreover, abrasion of the roller 32 itself can also be suppressed.

The resin material composing the roller 32 is not limited to polyamide. For example, polypropylene, phenol resins, and polyacetal are usable as the resin material. Polypropylene and phenol resins excel in mechanical strength. Polyacetal excels in abrasion resistance and fatigue resistance. A composite material that contains the resin materials exemplified herein may also be used.

The wall thickness of the roller 32, although not particularly limited, may be e.g. not less than 0.5 mm and not more than 30 mm. From the standpoint of keeping the guide member 30 compact, the wall thickness of the roller 32 is preferably 5 mm or less. The inner diameter of the roller 32, which is set in accordance with the diameter of the support shaft 32, is slightly larger than the diameter of the support shaft 32, so as to allow the roller 32 to rotate.

Only one guide member 30 may be disposed for one cord-like member 20, or two or more (plural) guide members 30 may be disposed for one cord-like member 20. The number of guide members 30 to be provided for one cord-like member 20 may be determined in accordance with the kind of cord-like member 20, the manner of installation, etc. As can be seen from what has already been explained, each guide member 30 can be relatively simple and can be compact, such that there are few restrictions as to the place where they can be provided.

The construction of the bracket 33 of the guide member 30 is not limited to what is exemplified in FIG. 2 and the like. The bracket 33 may have any construction that allows the guide member 30 to be attached to the body 1 or the like. Although the present embodiment illustrates a construction in which the support shaft 31 is secured to the bracket 33 via the base 31b, the construction for securing the support shaft 31 to the bracket 33 is not limited thereto. Furthermore, the guide member 30 may lack the bracket 33 and the base 31b. For example, the support shaft 31 may be directly bonded to the body 1 or the like. Moreover, it suffices if the roller 32 is supported in a manner not to come off the support shaft 31, and the structure to ensure this (i.e., means to prevent disengagement) is not limited to the stop member 34 exemplified herein.

Although FIG. 2 and the like illustrate a construction in which the support shaft 31 of the guide member 30 extends so as to be substantially orthogonal to both of the longitudinal direction LD of the cord-like member 20 and the first direction D1, it suffices if the support shaft 31 extends so as to intersect the longitudinal direction LD of the cord-like member 20. In other words, as shown in FIG. 7, the support shaft 31 may extend so as to be inclined with respect to the longitudinal direction LD of the cord-like member 20. The angle α made by the direction that the support shaft 31 extends and the longitudinal direction LD of the cord-like member 20 is, typically, not less than 45° and not more than 135°.

As has already been explained, the cord-like member 20 may be any of a variety of cables or hoses. Opposite ends of the cord-like member 20 may be disposed so that the distance between them is changeable during the riding of the motorcycle (straddled vehicle) 100. The guide member 30 of the motorcycle 100 according to the present embodiment is suitably used in a construction in which the distance between opposite ends of the cord-like member 20 is changeable during the riding of the motorcycle 100. If the distance between opposite ends of the cord-like member 20 changes during riding, deformation and movement of the cord-like member 20 may result, possibly risking contact of the cord-like member 20 with the body 1 or the like. In any place where a movement of the cord-like member 20 in a certain direction may risk contact, providing the guide member 30 to restrain the cord-like member 20 from moving in that direction can restrain the cord-like member 20 from coming into contact with the body 1 or the like. The guide member 30 of the motorcycle 100 according to the present embodiment has the aforementioned construction, whereby abrasion of the cord-like member 20 due to sliding of the cord-like member 20 against the guide member 30 can be suppressed.

One end of the cord-like member 20 may be connected to the handle bar 4, for example. In the case where one end of the cord-like member 20 is connected to the handle bar 4, the position of one end of the cord-like member 20 (i.e., its relative position with respect to the other end) may change with steering (operation of the handle bar 4), so that the distance between opposite ends of the cord-like member 20 is likely to change during riding. This well underlines the significance of applying the embodiment of the present invention.

Alternatively, one end of the cord-like member 20 may be connected to an unsprung portion of the motorcycle 100. The "unsprung portion" refers to the portion of the motorcycle 100 that is able to move with a stroke of the suspension(s). When one end of the cord-like member 20 is connected to the unsprung portion, the position of one end of the cord-like member 20 (i.e., its relative position with respect to the other end) may change with a stroke of the front suspension 9 and/or the rear suspension 10, so that the distance between opposite ends of the cord-like member 20 is likely to change during riding. This underlines the significance of applying the embodiment of the present invention.

When one end of the cord-like member 20 is connected to the handle bar 4, the other end of the cord-like member 20 may be connected to the power unit 5, for example. An example of the cord-like member 20 whose opposite ends are thus positioned is a clutch cable or a throttle cable.

Alternatively, when one end of the cord-like member 20 is connected to the handle bar 4, the other end of the cord-like member 20 may be connected to the unsprung portion of the motorcycle 100. An example of the cord-like member 20 whose opposite ends are thus positioned is a front brake hose.

When one end of the cord-like member 20 is connected to the unsprung portion of the motorcycle 100, the other end of the cord-like member 20 may be connected to the frame 7, for example. An example of the cord-like member 20 whose opposite ends are thus positioned is a rear brake hose.

Another example of the cord-like member 20 one of whose ends is connected to the unsprung portion of the motorcycle 100 is a lead wire for use with a speed sensor.

The motorcycle 100 includes various electrical components. Classifying these electrical components generally into electrical components which are provided on the handle bar 4 (hereinafter referred to as "first electrical components") and electrical components which are provided on any portion of the motorcycle 100 other than the handle bar 4 (hereinafter referred to as "second electrical components"), the cord-like member 20 may be a cable harness or a lead wire whose one end is connected to a first electrical component and whose other end is connected to a second electrical component.

Moreover, classifying electrical components generally into electrical components which are provided on the unsprung portion of the motorcycle 100 (hereinafter referred to as "third electrical components") and electrical components which are provided on any portion of the motorcycle 100 other than the unsprung portion (hereinafter referred to as "fourth electrical components"), the cord-like member 20 may be a cable harness or a lead wire whose one end is connected to a third electrical component and whose other end is connected to a fourth electrical component.

Now, examples of specific positioning of the exemplary cord-like member 20 will be described in detail.

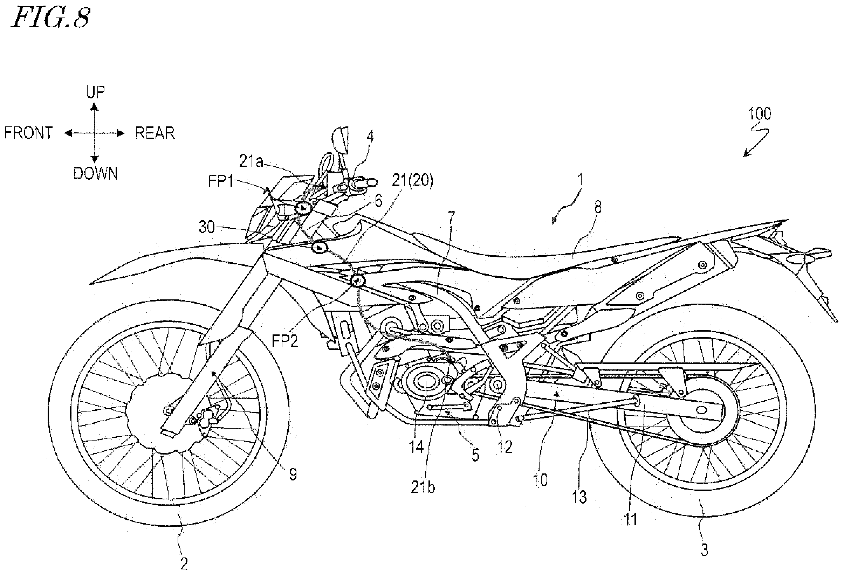

FIG. 8 is a diagram showing an example positioning of the cord-like member 20 in the case where the cord-like member 20 is a clutch cable 21.

As shown in FIG. 8, one end (first end) 21a of the clutch cable 21 is connected to the handle bar 4, while the other end (second end) 21b is connected to the power unit 5. More specifically, the first end 21a is connected to a clutch lever of the handle bar 4, while the second end 21b is connected to the clutch of the power unit 5.

In the example shown in FIG. 8, the clutch cable 21 is secured at two fixed points (a first fixed point FP1 and a second fixed point FP2). Specifically, at the first fixed point FP1 located closer to the handle bar 4, the clutch cable 21 is secured directly, or via a stay or the like, to a handle bar crown or an under bracket. Moreover, at the second fixed point FP2 located closer to the power unit 5, the clutch cable 21 is secured directly, or via a stay or the like, to the frame 7 or the power unit 5. Unless otherwise specified, securing of the cord-like member 20 at a "fixed point" means that movement of the cord-like member 20 in any direction (including rotation) is restrained there.

The guide member 30 (shown simplified as blank circles in FIG. 8, as in any subsequent figure) is disposed between the first fixed point FP1 and the second fixed point FP2, that is, in a range where the clutch cable 21 may move when the handle bar 4 is swung to the right or left (i.e., during steering). Since the guide member 30 is disposed in this manner, unwanted contact of the clutch cable 21 with the body 1 is restrained.

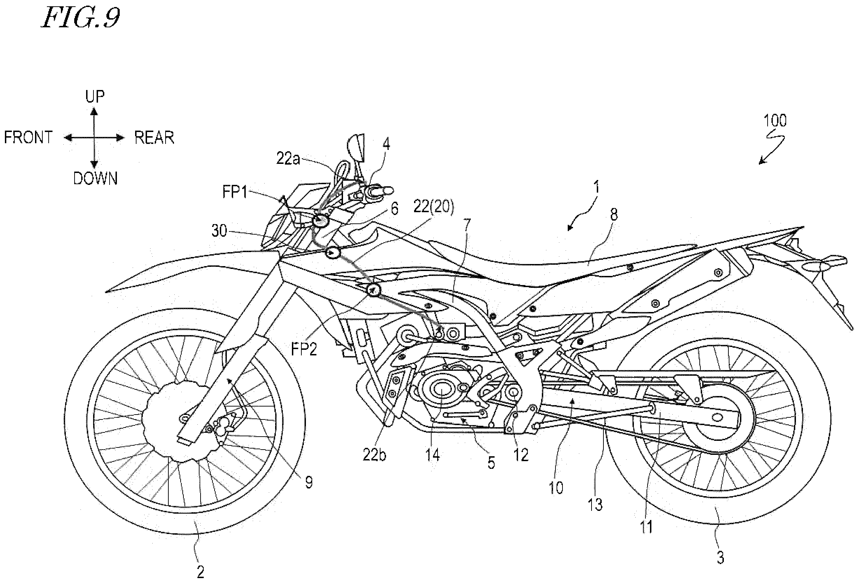

FIG. 9 is a diagram showing an example positioning of the cord-like member 20 in the case where the cord-like member 20 is a throttle cable 22.

As shown in FIG. 9, one end (first end) 22a of the throttle cable 22 is connected to the handle bar 4, while the other end (second end) 22b is connected to the power unit 5. More specifically, the first end 22a is connected to a grip of the handle bar 4, while the second end 22b is connected to the engine 14 of the power unit 5.

In the example shown in FIG. 9, the throttle cable 22 is secured at two fixed points (a first fixed point FP1 and a second fixed point FP2). Specifically, at the first fixed point FP1 located closer to the handle bar 4, the throttle cable 22 is secured directly, or via a stay or the like, to the handle bar crown or the under bracket. Moreover, at the second fixed point FP2 located closer to the power unit 5, the throttle cable 22 is secured directly, or via a stay or the like, to the frame 7 or the power unit 5.

The guide member 30 is disposed between the first fixed point FP1 and the second fixed point FP2, that is, in a range where the throttle cable 22 may move when the handle bar 4 is swung to the right or left (i.e., during steering). Since the guide member 30 is disposed in this manner, unwanted contact of the throttle cable 22 with the body 1 is restrained.

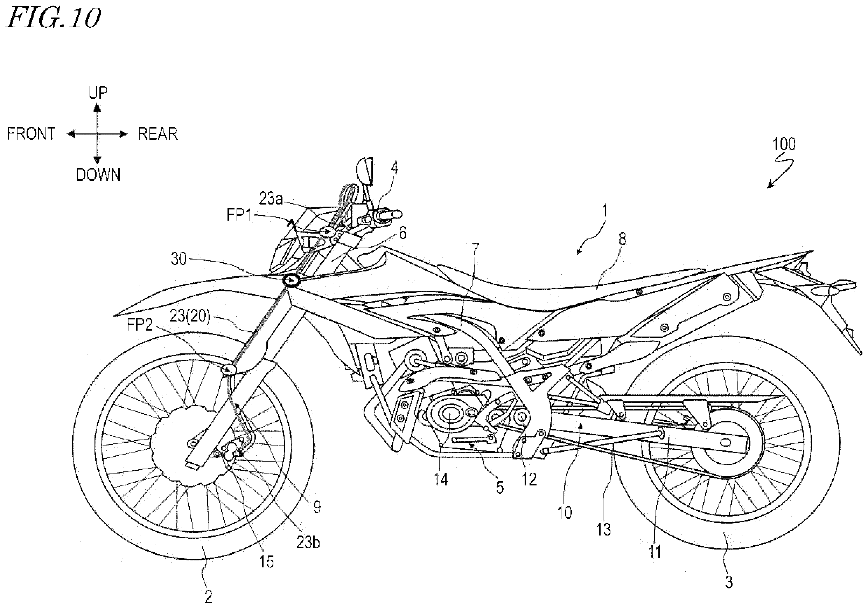

FIG. 10 is a diagram showing an example positioning of the cord-like member 20 in the case where the cord-like member 20 is a front brake hose 23.

As shown in FIG. 10, one end (first end) 23a of the front brake hose 23 is connected to the handle bar 4, while the other end (second end) 23b is connected to the unsprung portion at the vehicle front. More specifically, the first end 23a is connected to a front master cylinder of the handle bar 4, while the second end 23b is connected to a front brake caliper 15. The front brake caliper 15 is secured to one of the front forks 9 via a stay.

In the example shown in FIG. 10, the front brake hose 23 is secured at two fixed points (a first fixed point FP1 and a second fixed point FP2). Specifically, at the first fixed point FP1 located closer to the handle bar 4, the front brake hose 23 is secured to the front master cylinder. Moreover, at the second fixed point FP2 located closer to the unsprung portion, the front brake hose 23 is secured directly, or via a stay or the front fender, to one of the front forks 9. Note that, at the first fixed point FP1 located closer to the handle bar 4, the front brake hose 23 may be secured directly, or via a stay or the like, to the frame 7, the under bracket, or the handle bar crown.

The guide member 30 is disposed between the first fixed point FP1 and the second fixed point FP2, that is, in a range where the front brake hose 23 may move during a stroke of the front suspension 9. Since the guide member 30 is disposed in this manner, unwanted contact of the front brake hose 23 with the body 1 is restrained.

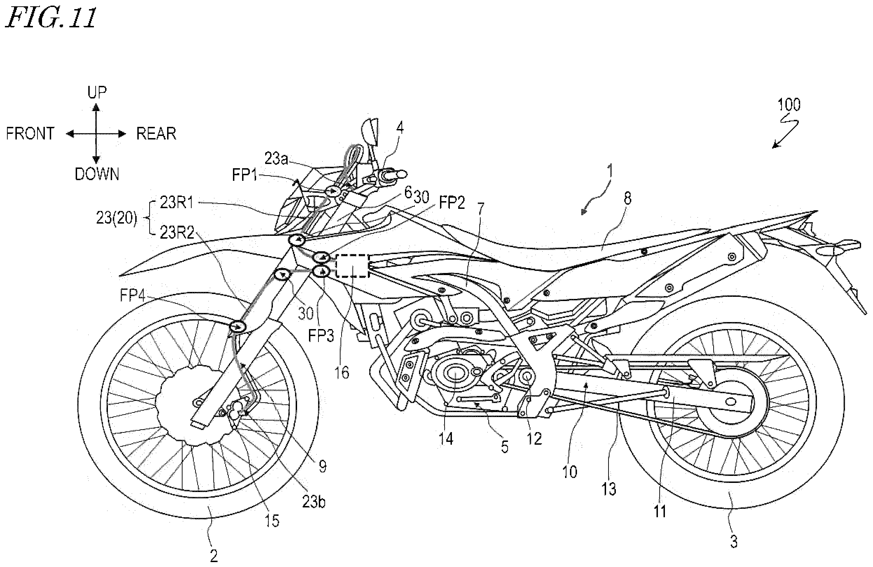

Note that FIG. 10 illustrates an example where the motorcycle 100 does not include an ABS. FIG. 11 is a diagram showing an example positioning of the front brake hose 23 in the case where the motorcycle 100 includes an ABS.

On the body 1 of the motorcycle 100 shown in FIG. 11, an ABS unit 16 for controlling a braking force that is applied to the wheels is mounted. The ABS unit 16 is secured to the frame 7 via a stay or the like, for example. In this construction, too, one end (first end) 23a of the front brake hose 23 is connected to the front master cylinder of the handle bar 4, while the other end (second end) 23b is connected to the front brake caliper 15. Moreover, in this construction, the front brake hose 23 includes: a portion located between the front master cylinder and the ABS unit 16 (hereinafter the "first portion") 23R1; and a portion located between the ABS unit 16 and the front brake caliper 15 (hereinafter the "second portion") 23R2.

In the example shown in FIG. 11, the first portion 23R1 of the front brake hose 23 is secured at two fixed points (a first fixed point FP1 and a second fixed point FP2). Specifically, at the first fixed point FP1 located closer to the front master cylinder, the first portion 23R1 is secured directly, or via a stay or the like, to the under bracket or the handle bar crown. Moreover, at the second fixed point FP2 located closer to the ABS unit 16, the first portion 23R1 is secured directly, or via a stay or the like, to the under bracket or the frame 7. Note that there may be cases where the first fixed point FP1 is chosen to be on the front master cylinder, or where the second fixed point FP2 is chosen to be on the ABS unit 16.

The second portion 23R2 of the front brake hose 23 is secured at two fixed points (a third fixed point FP3 and a fourth fixed point FP4). Specifically, at the third fixed point FP3 located closer to the ABS unit 16, the second portion 23R2 is secured directly, or via a stay or the like, to the under bracket or the handle bar crown. Moreover, at the fourth fixed point FP4 located closer to the front brake caliper 15, the second portion 23R2 is secured directly, or via a stay or the front fender, to one of the front forks 9. Note that there may be cases where the third fixed point FP3 is chosen to be on the ABS unit 16, or where the fourth fixed point FP4 is chosen to be on the front brake caliper 15.

In the example shown in FIG. 11, two guide members 30 are provided for the front brake hose 23. One of the two guide members 30 is disposed between the first fixed point FP1 and the second fixed point FP2, that is, in a range where the first portion 23R1 of the front brake hose 23 may move when the handle bar 4 is swung to the right or left (i.e., during steering). The other of the two guide members 30 is disposed between the third fixed point FP3 and the fourth fixed point FP4, that is, in a range where the second portion 23R2 of the front brake hose 23 may move during a stroke of the front suspension 9 or during steering. Since the guide members 30 are disposed in this manner, unwanted contact of the front brake hose 23 with the body 1 is restrained.

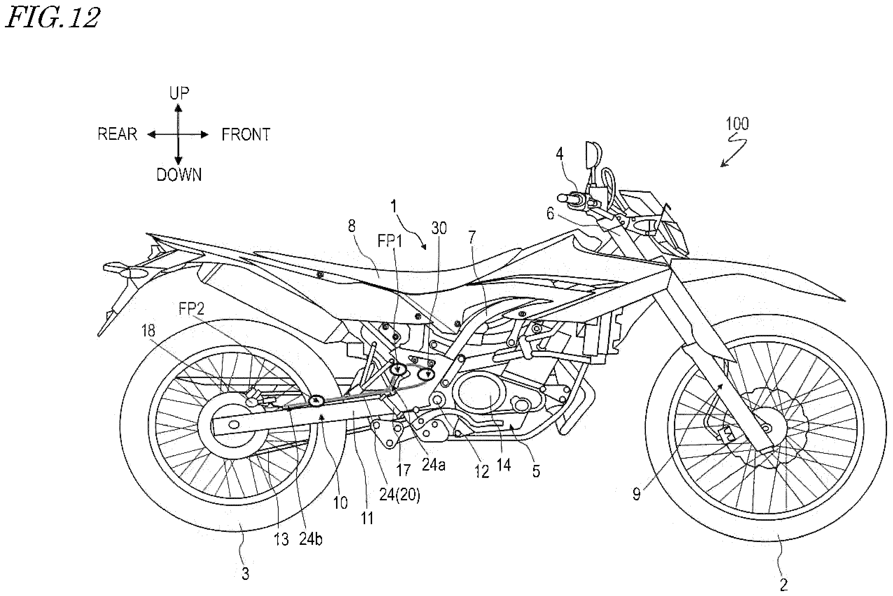

FIG. 12 is a diagram showing an example positioning of the cord-like member 20 in the case where the cord-like member 20 is a rear brake hose 24.

As shown in FIG. 12, one end (first end) 24a of the rear brake hose 24 is connected to the frame 7, while the other end (second end) 24b is connected to the unsprung portion at the vehicle rear. More specifically, the first end 24a is connected to a rear master cylinder 17, while the second end 24b is connected to a rear brake caliper 18. The rear master cylinder 17 is secured directly, or via a stay or the like, to the frame 7, while the rear brake caliper 18 is secured to one of the rear arms 11 via a stay or the like.

In the example shown in FIG. 12, the rear brake hose 24 is secured at two fixed points (a first fixed point FP1 and a second fixed point FP2). Specifically, at the first fixed point FP1 located closer to the frame 7, the rear brake hose 24 is secured directly, or via a stay or the like, to the frame 7 or the power unit 5. Moreover, at the second fixed point FP2 located closer to the unsprung portion, the rear brake hose 24 is secured directly, or via a stay or the like, to one of the rear arms 11 or the power unit 5. Note that there may be cases where the first fixed point FP1 is chosen to be on the rear master cylinder 17, or where the second fixed point FP2 is chosen to be on the rear brake caliper 18.

The guide member 30 is disposed between the first fixed point FP1 and the second fixed point FP2, that is, in a range where the rear brake hose 24 may move during a stroke of the rear suspension 10. Since the guide member 30 is disposed in this manner, unwanted contact of the rear brake hose 24 with the body 1 is restrained.

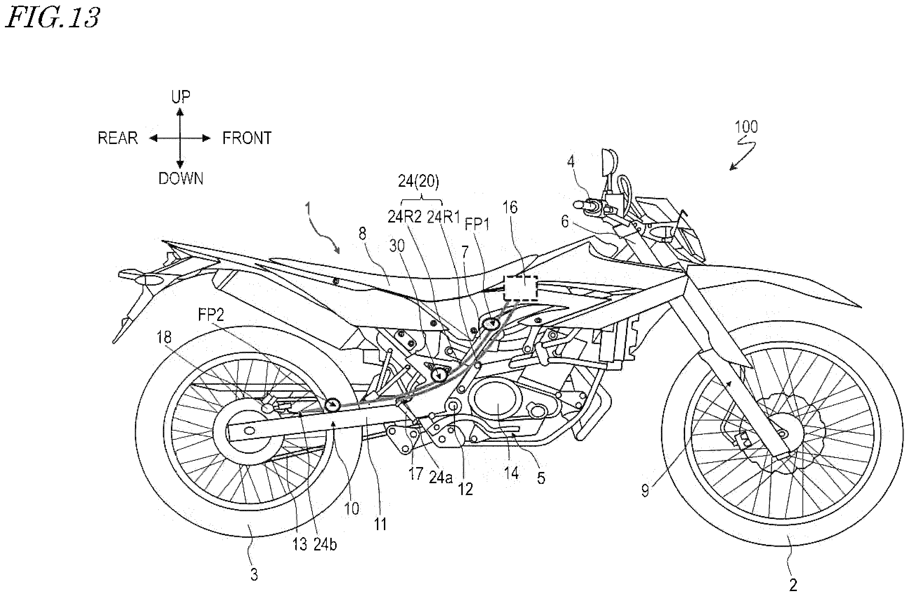

Note that FIG. 12 illustrates an example where the motorcycle 100 does not include an ABS. FIG. 13 is a diagram showing an example positioning of the rear brake hose 24 in the case where the motorcycle 100 includes an ABS.

On the body 1 of the motorcycle 100 shown in FIG. 13, an ABS unit 16 is mounted. In this construction, too, one end (first end) 24a of the rear brake hose 24 is connected to the rear master cylinder 17, while the other end (second end) 24b is connected to the rear brake caliper 18. Moreover, in this construction, the rear brake hose 24 includes: a portion located between the rear master cylinder 17 and the ABS unit 16 (hereinafter the "first portion") 24R1; and a portion located between the ABS unit 16 and the rear brake caliper 18 (hereinafter the "second portion") 24R2.

In the example shown in FIG. 13, the second portion 24R2 of the rear brake hose 24 is secured at two fixed points (a first fixed point FP1 and a second fixed point FP2). Specifically, at the first fixed point FP1 located closer to the ABS unit 16, the second portion 24R2 is secured directly, or via a stay or the like, to the frame 7 or the power unit 5. Moreover, at the second fixed point FP2 located closer to the rear brake caliper 18, the second portion 24R2 is secured directly, or via a stay or the like, to one of the rear arms 11 or the power unit 5. Note that there may be cases where the first fixed point FP1 is chosen to be on the ABS unit 16, or where the second fixed point FP2 is chosen to be on the rear brake caliper 18.

The guide member 30 is disposed between the first fixed point FP1 and the second fixed point FP2, that is, in a range where the rear brake hose 24 may move during a stroke of the rear suspension 10. Since the guide member 30 is disposed in this manner, unwanted contact of the rear brake hose 24 with the body 1 is restrained.

Although FIG. 13 illustrates a case where the ABS unit 16 is secured directly, or via a stay, to the frame 7, the ABS unit 16 may alternatively be secured directly, or via a stay, to one of the rear arms 11. In that case, the first portion 24R1 of the rear brake hose 24 may be secured at two fixed points (a first fixed point located closer to the rear master cylinder 17 and a second fixed point located closer to the ABS unit 16), and guide members may be provided between the first fixed point and the second fixed point. In this case, the first fixed point and the second fixed point may be chosen to be respectively on the rear master cylinder 17 and the ABS unit 16.

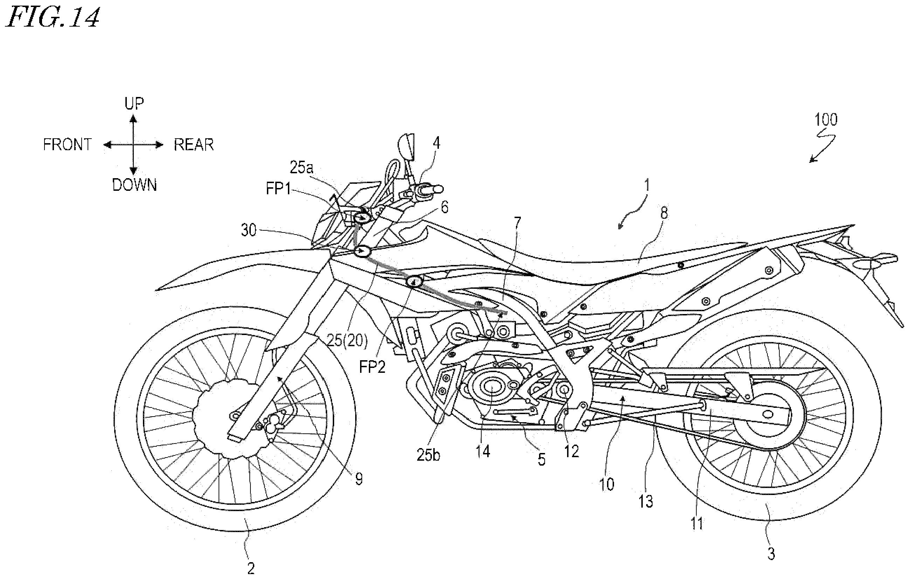

FIG. 14 is a diagram showing an example positioning of the cord-like member 20 in the case where the cord-like member 20 is a cable harness (or a lead wire) 25.

One end (first end) 25a of the cable harness 25 shown in FIG. 14 is connected to electrical components provided on the handle bar 4, while the other end (second end) 25b is connected to electrical components provided on the frame 7 or the power unit 5 (i.e., portions other than the handle bar 4). The former electrical components are secured directly, or via a stay or the like, to the handle bar crown or the under bracket. The latter electrical components are secured directly, or via a stay or the like, to the frame 7 or the power unit 5.

In the example shown in FIG. 14, the cable harness 25 is secured at two fixed points (a first fixed point FP1 and a second fixed point FP2). Specifically, at the first fixed point FP1 located closer to the handle bar 4, the cable harness 25 is secured directly, or via a stay or the like, to the handle bar crown or the under bracket. Moreover, at the second fixed point FP2 located closer to the frame 7 (or closer to the power unit 5), the cable harness 25 is secured directly, or via a stay or the like, to the frame 7 or the power unit 5.

The guide member 30 is disposed between the first fixed point FP1 and the second fixed point FP2, that is, in a range where the cable harness 25 may move when the handle bar 4 is swung to the right or left (i.e., during steering). Since the guide member 30 is disposed in this manner, unwanted contact of the cable harness 25 with the body 1 is restrained.

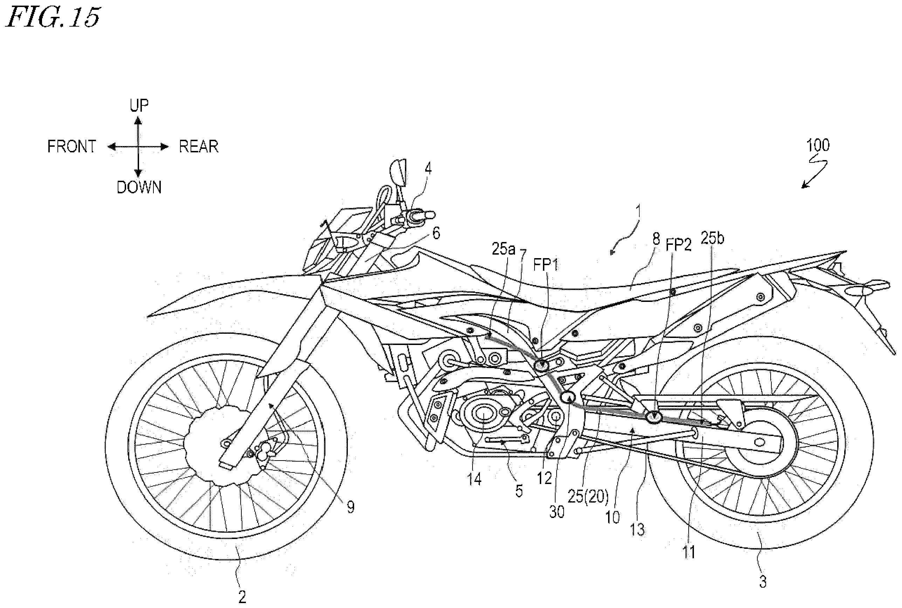

FIG. 15 is a diagram showing another example positioning of the cord-like member 20 in the case where the cord-like member 20 is a cable harness (or a lead wire) 25.

One end (first end) 25a of the cable harness 25 shown FIG. 15 is connected to electrical components provided on the unsprung portion at the vehicle rear, while the other end (second end) 25b is connected to electrical components provided on the frame 7 or the power unit 5 (i.e., portions other than the unsprung portion). The former electrical components are secured directly, or via a stay or the like, to one of the rear arms 11. The latter electrical components are secured directly, or via a stay or the like, to the frame 7 or the power unit 5.

In the example shown in FIG. 15, the cable harness 25 is secured at two fixed points (a first fixed point FP1 and a second fixed point FP2). Specifically, at the first fixed point FP1 located closer to the unsprung portion, the cable harness 25 is secured directly, or via a stay or the like, to one of the rear arms 11. Moreover, at the second fixed point FP2 located closer to the frame 7 (or closer to the power unit 5), the cable harness 25 is secured directly, or via a stay or the like, to the frame 7 or the power unit 5.

The guide member 30 is disposed between the first fixed point FP1 and the second fixed point FP2, that is, in a range where the cable harness 25 may move during a stroke of the rear suspension 10. Since the guide member 30 is disposed in this manner, unwanted contact of the cable harness 25 with the body 1 is restrained.

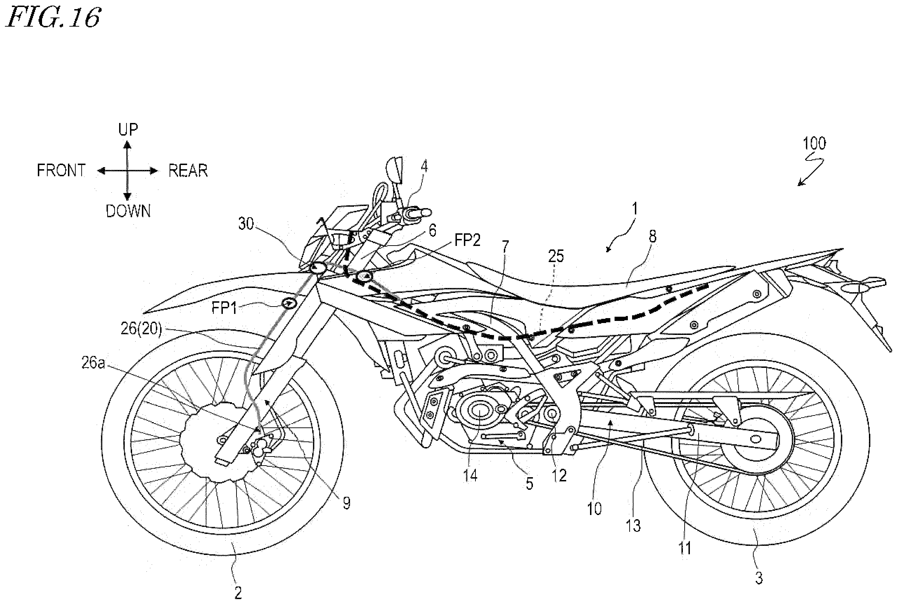

FIG. 16 is a diagram showing an example positioning of the cord-like member 20 in the case where the cord-like member 20 is a lead wire (hereinafter referred to as an "SP lead wire") 26 for use with a speed sensor on the front side (i.e., located at the vehicle front). The speed sensor on the front side is disposed on the stay, one of the front forks 9, or the front brake caliper 15 at the vehicle front.

As shown in FIG. 16, one end 26a of the SP lead wire 26 is connected to the speed sensor on the front side. Moreover, the SP lead wire 26 joins the cable harness 25, or more specifically, a main line of the cable harness 25. The main line of the cable harness 25 is secured directly, or via a stay or the like, to the frame 7 or the power unit 5.

In the example shown in FIG. 16, the SP lead wire 26 is secured at two fixed points (a first fixed point FP1 and a second fixed point FP2). Specifically, at the first fixed point FP1 located closer to the speed sensor, the SP lead wire 26 is secured directly, or via a stay or the like, to the handle bar crown, the under bracket, or one of the front forks. Moreover, at the second fixed point FP2 located closer to the cable harness 25, the SP lead wire 26 is secured directly, or via a stay or the like, to the frame 7 or the power unit 5.

The guide member 30 is disposed between the first fixed point FP1 and the second fixed point FP2, that is, in a range where the SP lead wire 26 may move during steering and during a stroke of the front suspension 9. Since the guide member 30 is disposed in this manner, unwanted contact of the SP lead wire 26 with the body 1 is restrained.

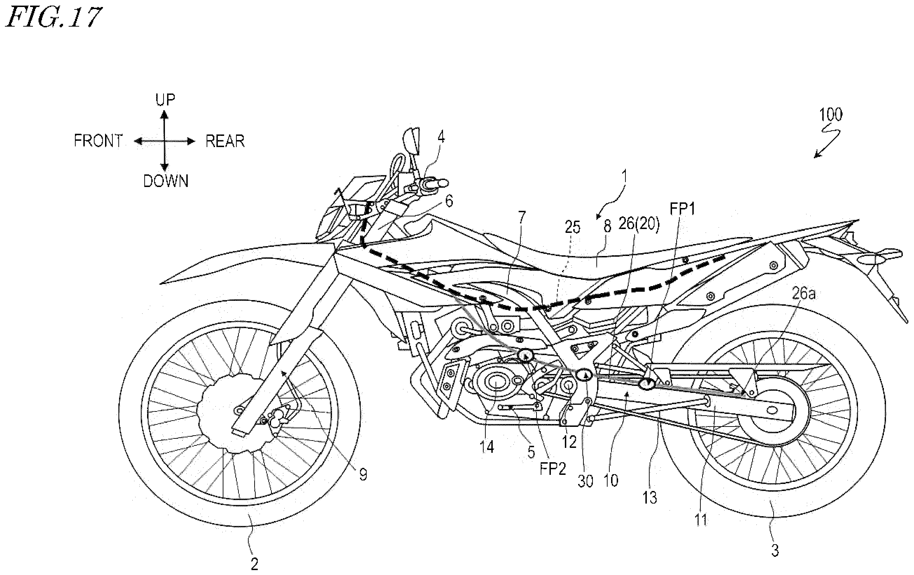

FIG. 17 is a diagram showing an example positioning of the cord-like member 20 in the case where the cord-like member 20 is a lead wire (SP lead wire) 26 for use with a speed sensor on the rear side (i.e., located at the vehicle rear). The speed sensor on the rear side is disposed on the stay, one of the rear arms 11, or the rear brake caliper at the vehicle rear.

As shown in FIG. 17, one end 26a of the SP lead wire 26 is connected to the speed sensor on the rear side. Moreover, the SP lead wire 26 joins the main line of the cable harness 25.

In the example shown in FIG. 17, the SP lead wire 26 is secured at two fixed points (a first fixed point FP1 and a second fixed point FP2). Specifically, at the first fixed point FP1 located closer to the speed sensor, the SP lead wire 26 is secured directly, or via a stay or the like, to one of the rear arms 11. Moreover, at the second fixed point FP2 located closer to the cable harness 25, the SP lead wire 26 is secured directly, or via a stay or the like, to the frame 7 or the power unit 5.

The guide member 30 is disposed between the first fixed point FP1 and the second fixed point FP2, that is, in a range where the SP lead wire 26 may move during a stroke of the rear suspension 10. Since the guide member 30 is disposed in this manner, unwanted contact of the SP lead wire 26 with the body 1 is restrained.

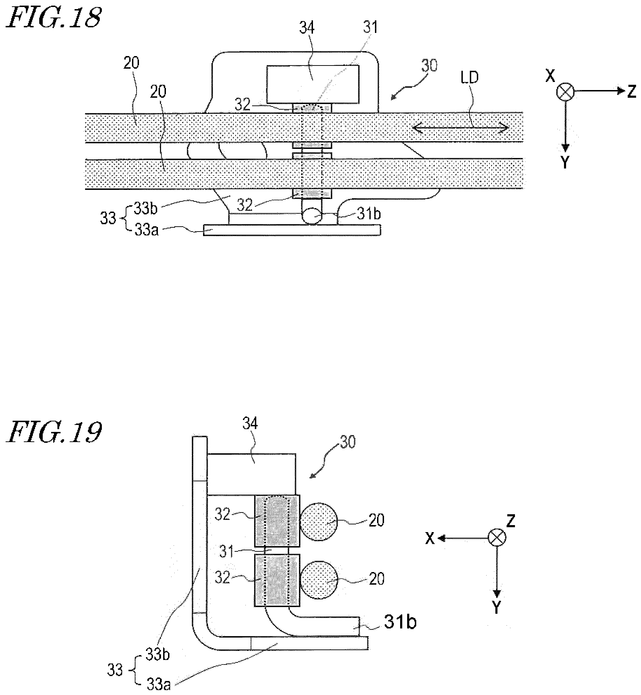

Although the above description illustrates examples where one or more guide members 30 are provided for one cord-like member 20, a common guide member 30 may be provided for a plurality (two or more) of cord-like members 20, as shown in FIG. 18.

In the example shown in FIG. 18, one guide member 30 is provided for two cord-like members 20 in common. The guide member 30 includes two rollers 32 which are placed coaxially on one support shaft 31. The two rollers 32 may rotate independently of each other. Since the guide member 30 has this construction, even if two cord-like members 20 undergo different motions from each other (i.e., experiencing different amounts of move or different moving directions), the corresponding roller 32 will rotate so as to follow the movement of each cord-like member 20, whereby abrasion of each cord-like member 20 can be suitably suppressed.

As described above, according to an embodiment of the present invention, it is possible to suppress abrasion, caused by a guide member, of a cord-like member 20 that is installed on the body 1 of the motorcycle 100, thereby improving freedom in installing the cord-like member 20.

Although motorcycles 100 for off-road use are exemplified in FIG. 1 and the like, a motorcycle according to an embodiment of the present invention is not limited to off-road use only. A motorcycle according to an embodiment of the present invention may be a motorcycle for on-road use, or a scooter, for example. Although a construction in which the power unit 5 is supported by the frame 7 is exemplified in FIG. 1 and the like, alternatively, the power unit 5 may be integrated with the rear arms 11 (called a unit swing mechanism). Instead of (or in addition to) an engine (i.e., an internal combustion engine), the power unit 5 may include a motor (i.e., an electric motor).

A straddled vehicle according to an embodiment of the present invention is meant to be any automotive vehicle on which a rider straddles and rides, without being limited to motorcycles. A straddled vehicle according to an embodiment of the present invention may be a three-wheeled motorcycle (LMW) of a type whose direction of travel is changed as its body is tilted, or an ATV (All Terrain Vehicle) such as a buggy. Furthermore, a straddled vehicle according to an embodiment of the present invention may not even include wheels, but may be a snowmobile or a wet bike, for example.

As described above, a straddled vehicle 100 according to an embodiment of the present invention includes a body 1 and a cord-like member(s) 20 that is installed on the outside and/or the inside of the body 1. The straddled vehicle 100 according to an embodiment of the present invention further includes a guide member 30 disposed so as to guide the cord-like member, the guide member 30 restraining the cord-like member from moving in a first direction D1 which is substantially orthogonal to a longitudinal direction LD of the cord-like member 20. The guide member 30 includes: a support shaft 31 which is substantially orthogonal to the first direction D1 and which extends so as to intersect the longitudinal direction LD of the cord-like member 20; and a roller 32 which is rotatably supported by the support shaft 31. The guide member 30 does not restrain the cord-like member 20 from moving in a second direction D2 which is an opposite direction to the first direction D1.

The straddled vehicle 100 according to an embodiment of the present invention further includes a guide member 30 disposed so as to guide the cord-like member 20, the guide member 30 restraining the cord-like member 20 from moving in a direction (first direction D1) which is substantially orthogonal to the longitudinal direction LD of the cord-like member 20. As a result, during riding (e.g., at the time of steering), the straddled vehicle 100 is able to restrain the cord-like member 20 from moving in the first direction D1 to come in contact with the body 1 or the like.

Moreover, a guide member of the straddled vehicle 100 according to an embodiment of the present invention includes: a support shaft 31 which is substantially orthogonal to the first direction D1 and which extends so as to intersect the longitudinal direction LD of the cord-like member 20; and a roller 32 which is rotatably supported by the support shaft 31. When the cord-like member 20 moves along the longitudinal direction LD, the roller 32 abutting with the cord-like member 20 rotates around the support shaft 31, whereby abrasion of the cord-like member 20 due to sliding of the cord-like member 20 against the guide member 30 can be suppressed. This makes possible an installation such that the cord-like member 20 has a relatively large contact load with respect to the guide member 30 (e.g., the cord-like member 20 has a relatively small bend radius), thus promoting installation freedom.

Furthermore, the guide member 30 of the straddled vehicle 100 according to an embodiment of the present invention does not restrain the cord-like member 20 from moving in a second direction D2 which is the opposite direction to the first direction D1. If the guide member 30 were arranged so as to restrain the cord-like member 20 from moving not only in the first direction D1 but also moving in the second direction D2, then the cord-like member 20 would be always in contact with the guide member 30. On the other hand, the straddled vehicle 100 according to an embodiment of the present invention is arranged so that the guide member 30 does not restrain cord-like member 20 from moving in the second direction D2, such that the cord-like member 20 can be in a state of non-contact with the guide member 30. As a result, the amount of time that the cord-like member 20 is in contact with the guide member 30 can be reduced (i.e., the chances of contact are reduced), and abrasion of the cord-like member 20 can be better suppressed. Moreover, in the case where the guide member 30 does not restrain the cord-like member 20 from moving in the second direction D2, the guide member 30 does not need to be structured so as to surround (sandwich) the cord-like member 20, thereby providing the advantage of facilitating the mounting work and the exchanging work of the cord-like member 20, and an advantage in that sand or mud that has come between the guide member 30 and the cord-like member 20 during riding is easier to fall off.

In one embodiment, the roller 32 has a cylindrical shape with a constant outer diameter.

When the roller 32 has a cylindrical shape with a constant outer diameter, such a roller 32 does not restrain the cord-like member 20 from moving along a rotation axis direction of the roller 32 (i.e., the direction that the support shaft 31 extends). Therefore, even in a straddled vehicle 100 for uses that are subject to relatively frequent (or large amounts of) vibrations during riding, vibrations of the cord-like member 20 associated with vibrations during riding can be dissipated (attenuated). As a result, in the case where the cord-like member 20 is connected to the handle bar 4, for example, the vibrations felt in the hands of the rider can be reduced, thus alleviating discomfort. Moreover, when the roller 32 has a cylindrical shape with a constant outer diameter, the relatively simple shape of the roller 32 allows the production cost of the guide member 30 to be reduced.

In one embodiment, the roller 32 is made of a resin material.

When the roller 32 is made of a resin material, the outer surface of the roller 32 is softer (i.e., having lower hardness) than in the case where the roller 32 is made of e.g. a metal material, whereby abrasion of the cord-like member 20 can be suppressed more reliably. Moreover, when the roller 32 is made of a resin material, the inner surface of the roller 32 is also soft, whereby the support shaft 31 can be restrained from being scratched. Therefore, when the support shaft 31 is made of a metal material, the support shaft 31 is restrained from rusting (that may begin in a scratch) and causing the roller 32 to stick to the support shaft 31.

In one embodiment, the roller 32 is made of polyamide, polypropylene, a phenol resin, polyacetal, or a composite material containing any of the above.

As the resin material composing the roller, polyamide, polypropylene, phenol resins, and polyacetal can be suitably used. When the resin material composing the roller is polyamide (e.g., nylon), it is easier to reduce the friction coefficient of the roller, whereby abrasion of the cord-like member can be suppressed more reliably. Also, abrasion of the roller itself can be suppressed. Moreover, polypropylene and phenol resins excel in mechanical strength. Polyacetal excels in abrasion resistance and fatigue resistance. Furthermore, the roller may be made of a composite material that contains any of the above.

In one embodiment, the guide member 30 includes no more than one roller 32 and no more than one support shaft 31.

When adopting a construction in which the guide member 30 includes neither a further roller 32 nor a further support shaft 31, i.e., a construction in which the guide member 30 includes only one roller 32 and one support shaft 31, it is possible to reduce the production cost of the guide member 30, and promote light-weightness and compactness of the guide member 30.

In one embodiment, opposite ends of the cord-like member 20 are disposed so that the distance between the opposite ends is changeable during the riding of the straddled vehicle 100.

The guide member 30 of the straddled vehicle 100 according to an embodiment of the present invention is suitably used in a construction in which the distance between opposite ends of the cord-like member 20 is changeable during the riding of the straddled vehicle 100. If the distance between opposite ends of the cord-like member 20 changes during riding, deformation and movement of the cord-like member 20 may result, possibly risking contact of the cord-like member 20 with the body 1 or the like. In any place where a movement of the cord-like member 20 in a certain direction may risk contact, providing the guide member 30 to restrain the cord-like member 20 from moving in that direction can restrain the cord-like member 20 from coming into contact with the body 1 or the like. Since the guide member 30 of the straddled vehicle 100 according to the present invention has the above-described construction, abrasion of the cord-like member 20 due to sliding of the cord-like member 20 against the guide member 30 can be suppressed.

In one embodiment, the straddled vehicle 100 further includes a handle bar 4 provided at a front portion of the body 1, and one end of the cord-like member 20 is connected to the handle bar 4.

In the case where one end of the cord-like member 20 is connected to the handle bar 4, the position of one end of the cord-like member 20 (i.e., its relative position with respect to the other end) may change with steering (handle bar operation), so that the distance between opposite ends of the cord-like member 20 is likely to change during riding. This underlines the significance of applying the embodiment of the present invention.

In one embodiment, the straddled vehicle 100 further includes a power unit, the power unit including an engine 14 or a motor and being mounted to the body 1, and the other end of the cord-like member 20 is connected to the power unit.

In the case where one end of the cord-like member 20 is connected to the handle bar 4, the other end of the cord-like member 20 may be connected to the power unit, for example.

In one embodiment, the cord-like member 20 is a clutch cable 21.

An example of the cord-like member 20 whose one end is connected to the handle bar 4 and whose other end is connected to the power unit 5 is the clutch cable 21.

In one embodiment, the cord-like member 20 is a throttle cable 22. An example of the cord-like member 20 whose one end is connected to the handle bar 4 and whose other end is connected to the power unit 5 is the throttle cable 22.

In one embodiment, the straddled vehicle 100 includes a front wheel 2 and a rear wheel 3, and the body 1 includes a front suspension 9 supporting the front wheel 2 and a rear suspension 10 supporting the rear wheel 3; and the other end of the cord-like member 20 is connected to an unsprung portion of the straddled vehicle 100.

In the case where one end of the cord-like member 20 is connected to the handle bar 4, the other end of the cord-like member 20 may be connected to the unsprung portion of the straddled vehicle 100.

In one embodiment, the cord-like member 20 is a front brake hose 23.

An example of the cord-like member 20 whose one end is connected to the handle bar 4 and whose other end is connected to the unsprung portion is the front brake hose 23.

In one embodiment, the straddled vehicle 100 includes a front wheel 2 and a rear wheel 3, and the body 1 includes a front suspension 9 supporting the front wheel and a rear suspension 10 supporting the rear wheel 3; and one end of the cord-like member 20 is connected to an unsprung portion of the straddled vehicle 100.

In the case where one end of the cord-like member 20 is connected to the unsprung portion of the straddled vehicle 100, the position of one end of the cord-like member 20 (i.e., its relative position with respect to the other end) may change with a stroke of the front suspension 9 and/or the rear suspension 10, so that the distance between opposite ends of the cord-like member 20 is likely to change during riding. This underlines the significance of applying the embodiment of the present invention.

In one embodiment, the body 1 includes a frame 7, and the other end of the cord-like member 20 is connected to the frame 7.

In the case where one end of the cord-like member 20 is connected to the unsprung portion of the straddled vehicle 100, the other end of the cord-like member 20 may be connected to the frame 7, for example.

In one embodiment, the cord-like member 20 is a rear brake hose 24.

An example of the cord-like member 20 whose one end is connected to the unsprung portion and whose other end is connected to the frame 7 is the rear brake hose 24.

In one embodiment, the cord-like member 20 is a lead wire 26 for use with a speed sensor.

Another example of the cord-like member 20 whose one end is connected to the unsprung portion of the straddled vehicle 100 is the lead wire 26 for use with a speed sensor.

In one embodiment, the straddled vehicle 100 includes a handle bar 4 provided at a front portion of the body 1; a first electrical component provided on the handle bar 4; and a second electrical component provided in a portion of the straddled vehicle 100 other than the handle bar 4, and the cord-like member 20 is a cable harness (or a lead wire) 25 having one end 25a that is connected to the first electrical component and the other end 25b that is connected to the second electrical component.

Classifying electrical components on the straddled vehicle 100 generally into electrical components which are provided on the handle bar 4 (first electrical components) and electrical components which are provided on any portion of the straddled vehicle 100 other than the handle bar 4 (second electrical components), the cord-like member 20 may be a cable harness (or a lead wire) 25 whose one end 25a is connected to a first electrical component and whose other end 25b is connected to a second electrical component.

In one embodiment, the straddled vehicle 100 includes a front wheel 2 and a rear wheel 3, and the body 1 includes a front suspension 9 supporting the front wheel 2 and a rear suspension 10 supporting the rear wheel 3; the straddled vehicle 100 further comprises a third electrical component provided on an unsprung portion of the straddled vehicle 100 and a fourth electrical component provided on a portion of the straddled vehicle 100 other than the unsprung portion; and the cord-like member 20 is a cable harness (or a lead wire) 25 having one end 25a that is connected to a third electrical component and the other end 25b that is connected to a fourth electrical component.

Classifying electrical components on the straddled vehicle 100 generally into electrical components which are provided on the unsprung portion of the straddled vehicle 100 (third electrical components) and electrical components provided on a portion of the straddled vehicle 100 other than the unsprung portion (fourth electrical components), the cord-like member 20 may be a cable harness (or a lead wire) 25 having one end 25a that is connected to a third electrical component and the other end 25b that is connected to a fourth electrical component.

According to an embodiment of the present invention as defined by the appended claims, it is possible to suppress abrasion, caused by a guide member, of a cord-like member that is installed on the body of a straddled vehicle, thereby improving freedom in installing the cord-like member. Embodiments of the present invention as defined by the appended claims can be suitably used in various straddled vehicles.

## Claims

1. A straddled vehicle (100) comprising:
a body (1); and
a cord-like member (20) installed on an outside and/or an inside of the body (1), wherein,
the straddled vehicle (100) further comprising a guide member (30) disposed so as to guide the cord-like member (20), the guide member (30) restraining the cord-like member (20) from moving in a first direction (D1) which is substantially orthogonal to a longitudinal direction (LD) of the cord-like member (20);
the guide member (30) includes a support shaft (31) which is substantially orthogonal to the first direction (D1) and which extends so as to intersect the longitudinal direction (LD) of the cord-like member, and includes a roller (32) rotatably supported by the support shaft (31); and
the guide member (30) does not restrain the cord-like member (20) from moving in a second direction (D2) which is an opposite direction to the first direction (D1) **characterized in that** the roller (32) has a cylindrical shape with a constant outer diameter from one end to the other end of the roller (32).

2. The straddled vehicle (100) of claim 1, wherein the roller (32) comprises a resin material.

3. The straddled vehicle (100) of claim 1 or 2, wherein the roller (32) is made of polyamide, polypropylene, a phenol resin, polyacetal, or a composite material containing any of the above.

4. The straddled vehicle (100) of any of claims 1 to 3, wherein the guide member (30) includes no more than one roller (32) and no more than one support shaft (31).

5. The straddled vehicle (100) of any of claims 1 to 4, wherein opposite ends of the cord-like member (20) are disposed so that a distance between the opposite ends is changeable during riding of the straddled vehicle (100).

6. The straddled vehicle (100) of any of claims 1 to 5, further comprising a handle bar (4) provided at a front portion of the body (1), wherein
one end (21a, 22a, 23a) of the cord-like member (20) is connected to the handle bar (4).

7. The straddled vehicle (100) of claim 6, further comprising a power unit (5), the power unit including an engine or a motor and being mounted to the body (1), wherein
another end (21b, 22b) of the cord-like member (20) is connected to the power unit (5).

8. The straddled vehicle (100) of claim 7, wherein the cord-like member (20) is a clutch cable (21) or the cord-like member (20) is a throttle cable (22).

9. The straddled vehicle (100) of claim 6, further comprising a front wheel (2) and a rear wheel (3), wherein,
the body (1) includes a front suspension (9) supporting the front wheel (2) and a rear suspension (10) supporting the rear wheel (3); and
another end (23b) of the cord-like member (20) is connected to an unsprung portion of the straddled vehicle (100).

10. The straddled vehicle (100) of claim 9, wherein the cord-like member (20) is a front brake hose (23).

11. The straddled vehicle (100) of any of claims 1 to 5, further comprising a front wheel (2) and a rear wheel (3), wherein,
the body (1) includes a front suspension (9) supporting the front wheel (2) and a rear suspension (10) supporting the rear wheel (3); and
one end of the cord-like member (20) is connected to an unsprung portion of the straddled vehicle (100).

12. The straddled vehicle (100) of claim 11, wherein,
the body (1) includes a frame (7); and
another end of the cord-like member (20) is connected to the frame (7) and/or
the cord-like member (20) is a lead wire (26) for use with a speed sensor.

13. The straddled vehicle (100) of claim 12, wherein the cord-like member (20) is a rear brake hose (24).

14. The straddled vehicle (100) of any of claims 1 to 5, further comprising:
a handle bar (4) provided at a front portion of the body (1);
a first electrical component provided on the handle bar (4); and
a second electrical component provided in a portion of the straddled vehicle (100) other than the handle bar (4), wherein
the cord-like member (20) is a cable harness (25) or a lead wire (26) having one end (25a) that is connected to the first electrical component and another end (25b) that is connected to the second electrical component or
the straddled vehicle (100) of any of claims 1 to 6 further comprising a front wheel (2) and a rear wheel (3), wherein,
the body (1) includes a front suspension (9) supporting the front wheel (2) and a rear suspension (10) supporting the rear wheel (3);
the straddled vehicle (100) further comprises
a third electrical component provided on an unsprung portion of the straddled vehicle (100) and
a fourth electrical component provided on a portion of the straddled vehicle (100) other than the unsprung portion; and
the cord-like member (20) is a cable harness (25) or a lead wire (26) having one end (25a) that is connected to the third electrical component and another end (25b) that is connected to the fourth electrical component.

## Patentansprüche

1. Ein Grätschsitzfahrzeug (100), umfassend:
einen Körper (1); und
ein seilähnliches Element (20), das auf einer Außenseite und/oder einer Innenseite des Körpers (1) installiert ist, wobei das Grätschsitzfahrzeug (100) weiterhin umfasst ein Führungselement (30), das angeordnet ist, um das seilähnliche Element (20) zu führen, wobei das Führungselement (30) das seilähnliche Element (20) daran hindert, sich in einer ersten Richtung (D1) zu bewegen, die im Wesentlichen orthogonal zu einer Längsrichtung (LD) des seilähnlichen Elements ist;
das Führungselement (30) eine Stützwelle (31) beinhaltet, die im Wesentlichen orthogonal zu der ersten Richtung (D1) ist, und die sich erstreckt, um die Längsrichtung (LD) des seilähnlichen Elements zu schneiden, und eine Rolle (32) beinhaltet, die drehbar von der Stützwelle gelagert ist; und
das Führungselement das seilähnliche Element (20) nicht daran hindert, sich in einer zweiten Richtung (D2) zu bewegen, die eine entgegengesetzte Richtung zu der ersten Richtung (D1) ist, **dadurch gekennzeichnet, dass** die Rolle (32) eine zylindrische Gestalt mit einem konstanten äußeren Durchmesser von einem Ende zu dem anderen Ende der Rolle (32) aufweist.

2. Das Grätschsitzfahrzeug (100) nach Anspruch 1, wobei die Rolle (32) ein Harzmaterial umfasst.

3. Das Grätschsitzfahrzeug (100) nach Anspruch 1 oder 2, wobei die Rolle (32) aus Polyamid, Polypropylen, einem Phenolharz, Polyacetal, oder einem Verbundmaterial, enthaltend irgendeines von den vorigen, hergestellt ist.

4. Das Grätschsitzfahrzeug (100) nach irgendeinem von Ansprüchen 1 bis 3, wobei das Führungselement (30) nicht mehr als eine Rolle (32) und nicht mehr als eine Stützwelle (31) beinhaltet.

5. Das Grätschsitzfahrzeug (100) nach irgendeinem von Ansprüchen 1 bis 4, wobei gegenüberliegende Enden des seilähnlichen Elements (20) so angeordnet sind, dass eine Distanz zwischen den gegenüberliegenden Enden während des Fahrens des Grätschsitzfahrzeugs (100) veränderbar ist.

6. Das Grätschsitzfahrzeug (100) nach irgendeinem von Ansprüchen 1 bis 5, weiterhin umfassend eine Griffstange (4), die an einem vorderen Abschnitt des Körpers (1) vorgesehen ist, wobei ein Ende (21a, 22a, 23a) des seilähnlichen Elements (20) mit der Griffstange (4) verbunden ist.

7. Das Grätschsitzfahrzeug (100) nach Anspruch 6, weiterhin umfassend eine Krafteinheit (5), wobei die Krafteinheit einen Verbrennungsmotor oder einen Motor beinhaltet und an dem Körper (1) montiert ist, wobei
ein anderes Ende (21b, 22b) des seilähnlichen Elements (20) mit der Krafteinheit (5) verbunden ist.

8. Das Grätschsitzfahrzeug (100) nach Anspruch 7, wobei das seilähnliche Element (20) ein Kupplungskabel (21) ist oder das seilähnliche Element (20) ein Drosselkabel (22) ist.

9. Das Grätschsitzfahrzeug (100) nach Anspruch 6, weiterhin umfassend ein Vorderrad (2) und ein Hinterrad (3), wobei
der Körper (1) eine vordere Aufhängung (9), die das Vorderrad (2) stützt, und eine hintere Aufhängung (10), die das Hinterrad (3) stützt, beinhaltet; und
ein anderes Ende (23b) des seilähnlichen Elements (20) mit einem ungefederten Abschnitt des Grätschsitzfahrzeugs (100) verbunden ist.

10. Das Grätschsitzfahrzeug (100) nach Anspruch 9, wobei das seilähnliche Element (20) ein vorderer Bremsschlauch (23) ist.

11. Das Grätschsitzfahrzeug (100) nach irgendeinem von Ansprüchen 1 bis 5, weiterhin umfassend ein Vorderrad (2) und ein Hinterrad (3), wobei
der Körper (1) eine vordere Aufhängung (9), die das Vorderrad (2) stützt, und eine hintere Aufhängung (10), die das Hinterrad (3) stützt, beinhaltet; und
ein Ende des seilähnlichen Elements (20) mit einem ungefederten Abschnitt des Grätschsitzfahrzeugs (100) verbunden ist.

12. Das Grätschsitzfahrzeug (100) nach Anspruch 11, wobei
der Körper (1) einen Rahmen (7) beinhaltet; und
ein anderes Ende des seilähnlichen Elements mit dem Rahmen (7) verbunden ist und/oder das seilähnliche Element (20) ein Verbindungskabel (26) zur Verwendung mit einem Geschwindigkeitssensor ist.

13. Das Grätschsitzfahrzeug (100) nach Anspruch 12, wobei das seilähnliche Element (20) ein hinterer Bremsschlauch (24) ist.

14. Das Grätschsitzfahrzeug (100) nach irgendeinem von Ansprüchen 1 bis 5, weiterhin umfassend:
eine Griffstange (4), die an einem vorderen Abschnitt des Körpers (1) vorgesehen ist;
eine erste elektrische Komponente, die an der Griffstange (4) vorgesehen ist; und
eine zweite elektrische Komponente, die in einem anderen Abschnitt des Grätschsitzfahrzeugs (100) als der Griffstange vorgesehen ist, wobei
das seilähnliche Element (20) ein Kabelbaum (25) oder ein Verbindungskabel (26) ist, das ein Ende (25a), das mit der ersten elektrischen Komponente verbunden ist, und ein anderes Ende (25b) aufweist, das mit der zweiten elektrischen Komponente verbunden ist, oder
das Grätschsitzfahrzeug (100) nach irgendeinem von Ansprüchen 1 bis 6 weiterhin umfassend ein Vorderrad (2) und ein Hinterrad (3), wobei
der Körper (1) eine vordere Aufhängung (9), die das Vorderrad (2) stützt, und eine hintere Aufhängung (10), die das Hinterrad (3) stützt, beinhaltet;
das Grätschsitzfahrzeug (100) weiterhin umfasst
eine dritte elektrische Komponente, die an einem ungefederten Abschnitt des Grätschsitzfahrzeugs (100) vorgesehen ist, und
eine vierte elektrische Komponente, die an einem anderen Abschnitt des Grätschsitzfahrzeugs (100) als dem ungefederten Abschnitt vorgesehen ist; und
das seilähnliche Element (20) ein Kabelbaum (25) oder ein Verbindungskabel (26) ist, das ein Ende (25a), das mit der dritten elektrischen Komponente verbunden ist, und ein anderes Ende (25b) aufweist, das mit der vierten elektrischen Komponente verbunden ist.

## Revendications

1. Véhicule à selle (100) comprenant :
un corps (1), et
un élément de type cordon (20) placé sur l'extérieur et/ou sur l'intérieur du corps (1), où :
le véhicule à selle (100) comprend en outre un élément de guidage (30) disposé de sorte à guider l'élément de type cordon (20), l'élément de guidage (30) empêchant l'élément de type cordon (20) de bouger dans une première direction (D1) qui est pratiquement orthogonale à la direction longitudinale (LD) de l'élément de type cordon (20),
l'élément de guidage (30) inclut un axe de support (31) qui est pratiquement orthogonal à la première direction (D1) et qui s'étend de sorte à couper la direction longitudinale (LD) de l'élément de type cordon, et il inclut un galet (32) supporté pour pouvoir tourner par l'axe de support (31), et
l'élément de guidage (30) n'empêche pas l'élément de type cordon (20) de bouger dans une seconde direction (D2) qui représente la direction opposée à la première direction (D1), **caractérisé en ce que** le galet (32) présente une forme cylindrique de diamètre externe constant d'une extrémité à l'autre du galet (32).

2. Véhicule à selle (100) selon la revendication 1, dans lequel le galet (32) comporte un matériau de résine.

3. Véhicule à selle (100) selon la revendication 1 ou la revendication 2, dans lequel le galet (32) est constitué de polypropylène polyamide, de résine phénolique, de polyacétal ou d'un matériau composite contenant l'un quelconque de ceux-ci dessus.

4. Véhicule à selle (100) selon l'une quelconque des revendications 1 à 3, dans lequel l'élément de guidage (30) n'inclut pas plus d'un galet (32) et pas plus d'un axe de support (31).

5. Véhicule à selle (100) selon l'une quelconque des revendications 1 à 4, dans lequel les extrémités opposées de l'élément de type cordon (20) sont placées de sorte à ce que la distance entre les extrémités opposées puisse être modifiée pendant la conduite du véhicule à selle (100).

6. Véhicule à selle (100) selon l'une quelconque des revendications 1 à 5, comprenant en outre un guidon (4) disposé au niveau d'une partie avant du corps (1), où
une première extrémité (21a, 22a, 23a) de l'élément de type cordon (20) est reliée au guidon (4).

7. Véhicule à selle (100) selon la revendication 6, comprenant en outre une unité de puissance (5), l'unité de puissance incluant un moteur thermique ou un moteur électrique et étant montée sur le corps (1), où
une autre extrémité (21b, 22b) de l'élément de type cordon (20) est reliée à l'unité de puissance (5).

8. Véhicule à selle (100) selon la revendication 7, dans lequel l'élément de type cordon (20) est un câble d'embrayage (21), ou bien l'élément de type cordon (20) est un câble d'accélérateur (22).

9. Véhicule à selle (100) selon la revendication 6, comprenant en outre une roue avant (2) et une roue arrière (3), où
le corps (1) inclut une suspension avant (9) supportant la roue avant (2) et une suspension arrière (10) supportant la roue arrière (3), et
une autre extrémité (23b) de l'élément de type cordon (20) est reliée à une partie non suspendue du véhicule à selle (100).

10. Véhicule à selle (100) selon la revendication 9, dans lequel l'élément de type cordon (20) est un tuyau de frein avant (23).

11. Véhicule à selle (100) selon l'une quelconque des revendications 1 à 5, comprenant en outre une roue avant (2) et une roue arrière (3), où
le corps (1) inclut une suspension avant (9) supportant la roue avant (2) et une suspension arrière (10) supportant la roue arrière (3), et
une première extrémité de l'élément de type cordon (20) est reliée à une partie non suspendue du véhicule à selle (100) .

12. Véhicule à selle (100) selon la revendication 11, dans lequel :
le corps (1) inclut un cadre (7), et
une autre extrémité de l'élément de type cordon (20) est reliée au cadre (7), et/ou
l'élément de type cordon (20) est un fil de connexion (26) destiné à être utilisé avec un capteur de vitesse.

13. Véhicule à selle (100) selon la revendication 12, dans lequel l'élément de type cordon (20) est un tube de frein arrière (24).

14. Véhicule à selle (100) selon l'une quelconque des revendications 1 à 5, comprenant en outre :
un guidon (4) disposé au niveau d'une partie avant du corps (1),
un premier composant électrique disposé sur le guidon (4), et
un deuxième composant électrique disposé dans une partie du véhicule à selle (100) différente du guidon (4), où
l'élément de type cordon (20) est un faisceau de câbles (25) ou un fil de connexion (26) dont une première extrémité (25a) est reliée au premier composant électrique et une autre extrémité (25b) est reliée au deuxième composant électrique, ou
le véhicule à selle (100) conforme à l'une quelconque des revendications 1 à 6 comprend en outre une roue avant (2) et une roue arrière (3), où
le corps (1) inclut une suspension avant (9) supportant la roue avant (2) et une suspension arrière (10) supportant la roue arrière (3),
le véhicule à selle (100) comprend en outre :
un troisième composant électrique disposé sur une partie non suspendue du véhicule à selle (100), et
un quatrième composant électrique disposé sur une partie du véhicule à selle (100) différente de la partie non suspendue, et
l'élément de type cordon (20) est un faisceau de câbles (25) ou un fil de connexion (26) dont une première extrémité (25a) est reliée au troisième composant électrique et une autre extrémité (25b) est reliée au quatrième composant électrique.
